# EUROPÄISCHE PATENTANMELDUNG

(11) **EP 0 915 548 A2**
(43) Veröffentlichungstag der Anmeldung: **12.05.1999**
(21) Anmeldenummer: 98117680.3
(22) Anmeldetag: 18.09.1998
(51) Int. Cl.: H02H 3/08, H02H 7/125

(54) **Gleichrichteranlage mit Schutzschaltung und Verfahren zum Abschalten einer Gleichrichteranlage**

(30) Priorität: 07.11.1997 DE 19749359
(71) Anmelder: HÜLS AKTIENGESELLSCHAFT, 45764 Marl (DE)
(72) Erfinder: Recker, Johannes, 45721 Haltern (DE)

(57) **Zusammenfassung**

Die Erfindung bezieht sich auf eine Gleichrichteranlage mit einer Schutzschaltung zum Abschalten der Anlage bei Überlast oder Kurzschluß sowie ein Verfahren hierzu. Die Gleichrichteranlage umfaßt wenigstens zwei parallele Zweige, wobei jeder Zweig zumindest einen Gleichrichter und eine Stromerfassungseinrichtung aufweist. Es wird neben dem durch jeden Gleichrichter fließenden Strom auch der Anlagenstrom erfaßt, welcher definiert ist durch die Summe der Ausgangsströme aller parallelen Zweige. Eine Steuereinrichtung schaltet im Ansprechen auf die erfaßten Ströme in den Zweigen angeordnete Schalter derart, daß alle parallelen Zweige unverzögert abgeschaltet werden, wenn der Anlagenstrom einen Schwellwert überschreitet oder der Anlagenstrom von der Summe der durch jeden Gleichrichter fließenden Ströme abweicht.

## Beschreibung

Die vorliegende Erfindung bezieht sich auf eine Gleichrichteranlage mit einer Schutzschaltung zum Abschalten bei Überstrom oder Kurzschluß gemäß dem Oberbegriff des Patentanspruchs 1 sowie auf ein Verfahren zum Abschalten einer solchen Gleichrichteranlage gemäß dem Oberbegriff des Patentanspruchs 6.

Gleichrichteranlagen der in Rede stehenden Art werden zur Stromversorgung von z.B. Elektrolyse- oder Galvanoanlagen eingesetzt. Die dabei in diesen Anlagen auftretenden Nennströme liegen zwischen 1 bis 300 kA. Daher werden üblicherweise mehrere Parallelzweige verwendet, wobei in jedem Zweig ein Trafo, ein Gleichrichter und ein Abschaltrelais angeordnet ist. Weiterhin befindet sich in jedem Zweig eine Einrichtung zur Erfassung des durch den Zweig fließenden Stroms.

Bei den bekannten Gleichrichteranlagen erfolgt eine Überlastabschaltung des Gleichrichters in einem Zweig, wenn ein Strom detektiert wird, der größer als das 1,1-fache des Gleichrichternennstroms ist. Die Überlastabschaltung erfolgt in einem Bereich zwischen dem 1,1 bis 2,5-fachen des Nennstroms verzögert, da die Gleichrichter solche Ströme kurzzeitig ohne Zerstörung verkraften können. Fällt in Folge eines Defekts ein Gleichrichterzweig aus, so werden, bis eine Regelung eingreift, die verbleibenden Gleichrichterzweige kurzzeitig überlastet, was jedoch zulässig für diese kurze Zeitdauer ist. Bei einem detektierten Zweigstrom mit einem Wert größer als das 2,5-fache des Gleichrichternennstroms erfolgt die Abschaltung unverzögert, da Ströme in dieser Größenordnung bereits sehr schnell die Gleichrichter zerstören.

Es wird bei der bekannten Gleichrichteranlage als nachteilig angesehen, daß im Falle eines Kurzschlusses eine unverzögerte Abschaltung erst dann erfolgt, wenn der Kurzschlußstrom größer als das 2,5-fache des Gleichrichternennstroms ist. Dies kann zur völligen Zerstörung der Gleichrichter führen.

Als Alternative dazu bietet sich lediglich an, die Abschaltung eines Zweigs bei einem Wert größer als dem 1,1-fachen des Nennstroms unverzögert vorzunehmen. Dies besitzt jedoch den Nachteil, daß bei jeder Abschaltung eines Zweigs die verbleibenden Parallelzweige kurzzeitig überlastet werden, was wiederum zum Abschalten dieser Zweige und schließlich zum vollständigen Ausfall der Gleichrichteranlage führen kann. Zudem wird eine derartige Abschaltung nur im Vollastbetrieb effektiv, d.h., wenn die Zweige bereits mit einem Strom im Bereich des Nennstroms betrieben werden. Im Teillastbereich, beispielsweise bei dem Betrieb mit halben Nennstrom, würde ein Kurzschluß bis zum Erreichen des 1,1-fachen des Nennstromes in alle Zweige eingespeist.

Die Aufgabe der vorliegenden Erfindung ist es, eine Gleichrichteranlage mit einer Schutzschaltung und ein Verfahren zum Abschalten einer Gleichrichteranlage anzugeben, bei denen bei Überlast oder Kurzschluß eine fehlerfreie und schnelle Abschaltung der Anlage erfolgt.

Diese Aufgabe wird von einer Gleichrichteranlage mit den Merkmalen des Patentanspruchs 1 sowie einem Verfahren mit den Schritten des Patentanspruchs 6 gelöst.

Das besondere an der erfindungsgemäßen Gleichrichteranlage besteht darin, daß die Schutzschaltung eine Stromerfassungseinrichtung aufweist zum Erfassen des Anlagenstroms der Gleichrichteranlage, welcher definiert ist durch die Summe der Ausgangsströme aller parallelen Zweige. Weiterhin weist die Schutzschaltung eine Steuerschaltung auf, welche die Relais aller Zweige im Ansprechen auf die erfaßten Gleichrichterzweigströme und den erfaßten Anlagenstrom steuert.

Dieser Lösung liegt die Erkenntnis zugrunde, daß es von Vorteil ist, eine Abschaltung der Gleichrichteranlage nicht nur in Abhängigkeit der erfaßten Gleichrichterzweigströme vorzunehmen, sondern auch den Anlagenstrom der Gleichrichteranlage für einen Abschaltvorgang zu berücksichtigen. Dies bietet den Vorteil, daß zusätzliche Information hinsichtlich der in der Anlage fließenden Ströme vorliegt, welche dazu verwendet werden kann, den Abschaltvorgang fehlerfrei und schnell durchzuführen.

Gemäß einer vorteilhaften Ausgestaltung der Gleichrichteranlage weist die Steuereinrichtung eine Vergleichseinrichtung auf, um die Summe der erfaßten Gleichrichterzweigströme mit dem erfaßten Anlagenstrom zu vergleichen. Dies ermöglicht eine sofortige Bestimmung, ob in einem Gleichrichter ein Kurzschluß aufgetreten ist, da nur in diesem Fall der erfaßte Anlagenstrom kleiner ist als die Summe der erfaßten Gleichrichterzweigströme.

Vorzugszweise ist in wenigstens einem Zweig ein Transformator dem Gleichrichter vorgeschaltet, wodurch sich die vom Gleichrichter zu verarbeitende Spannung erheblich reduziert und billigere Gleichrichter verwendet werden können.

Weiterhin ist es von Vorteil, wenn die Stromerfassungseinrichtung zur Erfassung des Gleichrichterzweigstroms zwischen dem Transformator und dem Gleichrichter angeordnet ist, was ermöglicht, einen großen Bereich zu überwachen.

Das erfindungsgemäße Verfahren gemäß Patentanspruch 6 zeichnet sich dadurch aus, daß die Schalter aller parallelen Zweige unverzögert abgeschaltet werden, wenn der Anlagenstrom, welcher definiert ist als die Summe der Ausgangsströme aller parallelen Zweige, einen Schwellwert überschreitet oder der Anlagenstrom kleiner ist als die Summe der in jeden Gleichrichter hineinfließenden Ströme.

Im erstgenannten Fall wird ein Überstromschutz realisiert, wobei ein kurzzeitiges Überschreiten des Nennstroms in nur einem Zweig nicht zu einem Erreichen des Schwellwerts für den Anlagenstrom führt. Lediglich wenn der Strom in einem einzelnen Zweig sehr viel höher als der Gleichrichternennwert ist oder in mehreren Zweigen gleichzeitig größere Ströme als der Gleichrichternennwert fließen, wird der Schwellwert für den Anlagenstrom erreicht, und alle parallelen Zweige werden unverzögert abgeschaltet.

Im zweitgenannten Fall, daß die Summe der in jeden Gleichrichter hineinfließenden Ströme vom Anlagenstrom abweicht, liegt ein Kurzschluß in einem Gleichrichter vor, was ebenfalls ein unverzögertes Abschalten aller parallelen Zweige erfordert. In einer bevorzugten Ausgestaltung wird vor dem Erreichen des Schwellwerts und/oder beim Auftreten einer vorbestimmten Differenz zwischen dem Anlagenstrom und der Summe der Gleichrichterzweigströme ein akustisches oder optisches Warnsignal abgegeben, um den Bediener einer Anlage darauf hinzuweisen, daß die Anlage zwar noch betriebsfähig ist, aber sich in einem kritischen Zustand befindet und daher eine besondere Aufmerksamkeit oder eine Fehlerbehebung erfordert.

Im folgenden wird ein Ausführungsbeispiel der Erfindung unter Bezugnahme auf die beigefügte Zeichnung näher beschrieben. Es zeigen:
Fig. 1 ein schematisches Schaltungsdiagramm der erfindungsgemäßen Gleichrichteranlage, und
Fig. 2 ein Flußdiagramm, welches die Schritte des erfindungsgemäßen Verfahrens illustriert.

Die Gleichrichteranlage umfaßt eine Hochspannungssammelschiene 1, an die eine Wechselspannung mit einer Spannungsamplitude von etwa 1 kV bis einigen 100 kV angelegt wird. Die Hochspannungssammelschiene 1 ist über eine Vielzahl von parallelen Zweigen 2 mit einer Niederspannungssammelschiene 3 verbunden. Die Spannung auf der Niederspannungssammelschiene 3 beträgt je nach Anwendungsfall zwischen einigen Volt bis zu 1000 V. In jedem Zweig 2 sind seriell hintereinander ein Schalter 4, ein Wechselspannungstransformator 5, eine Stromerfassungseinrichtung 6 und ein Gleichrichter 7 geschaltet. In jedem Zweig befindet sich zwischen dem Gleichrichter 7 und der Niederspannungssammelschiene 3 ein weiterer Schalter, um den Zweig auch von der Niederspannungsseite her isolieren zu können.

Die in den parallelen Zweigen durch die Gleichrichter 7 fließenden Ströme I₁ bis I₄ werden von den Stromerfassungseinrichtungen 6 beispielsweise induktiv gemessen.

Die Stromerfassungseinrichtungen geben Signale i₁ bis i₄ ab, welche die durch die parallelen Zweige fließenden Ströme entsprechend repräsentieren. Eine Steuereinrichtung 8 empfängt eingangsseitig die Signale i₁ bis i₄ sowie ein Signal i₅ von einer Anlagenstromerfassungseinrichtung 9, welches ein Maß für den Anlagenstrom I₅ ist, der aus der Summe der Ströme I₁ bis I₄ aller Parallelzweige gebildet ist. Ausgangsseitig ist die Steuereinrichtung 8 mit jedem Schalter 4 der parallelen Zweige 2 verbunden, um ein Steuersignal S an den Schalter zum Ausführen eines Schaltvorgangs zu übertragen. Der Schalter ist ein einpoliger Umschalter, welcher zwischen einem offenen und geschlossenen Zustand umschaltbar ist.

Es ist darauf hinzuweisen, daß der Schalter 4, die Transformatoren 5, die. Stromerfassungseinrichtungen 6 und 9 sowie die Gleichrichter 7 herkömmliche: im Stand der Technik bekannte Bauelemente sind. Ihr Aufbau und ihre Funktionsweise sind dem Fachmann auch ohne ausführliche Beschreibung bekannt.

Wenngleich in der Zeichnung nur eine einpolige Prinzipskizze der Gleichrichteranlage dargestellt wurde, ist dem Fachmann klar, daß tatsächlich auch mehrpolige, insbesondere dreipolige Ausführungen zum Anschluß an eine dreiphasige Wechselspannung exsistieren. In diesem Fall sind alle oben beschriebenen Bauelemente mehrpolig ausgeführt, ohne daß dies einer besonderen Erläuterung bedarf.

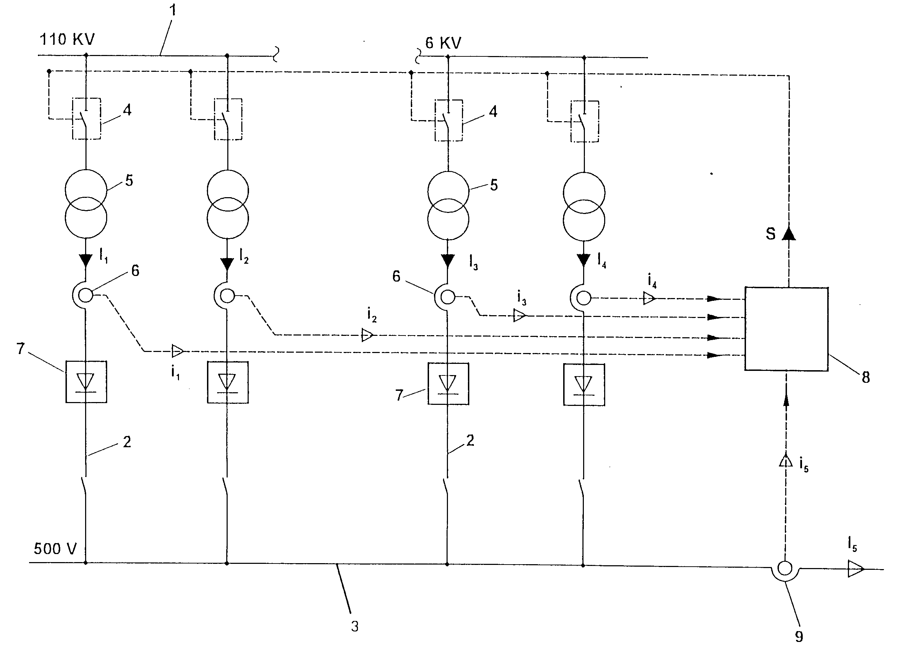

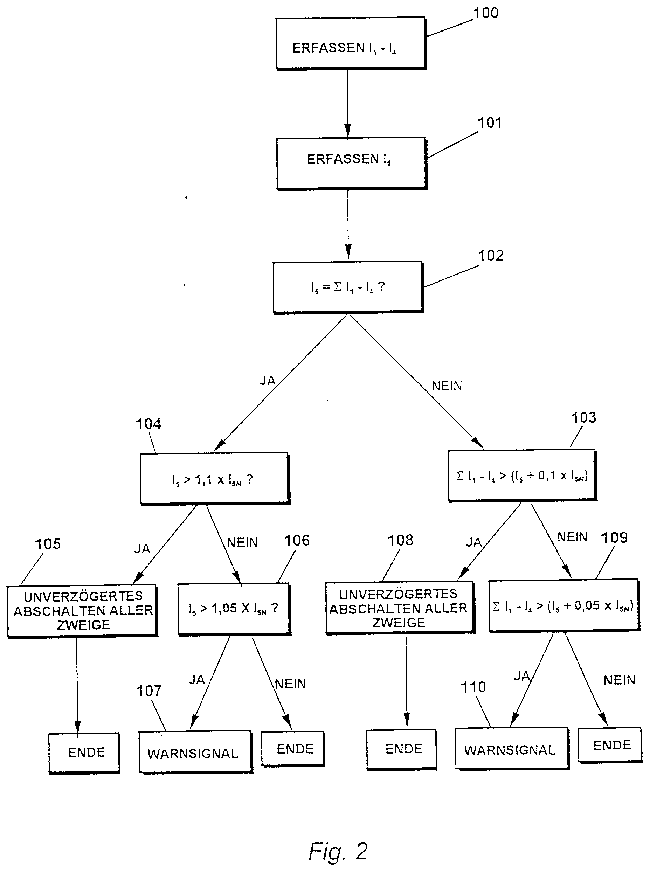

Unter Bezugnahme auf Fig. 2 wird nunmehr das erfindungsgemäße Verfahren zum Abschalten der in Fig. 1 gezeigten Gleichrichteranlage beschrieben.

In einem Schritt 100 bzw. 101 werden zunächst die Ströme I₁ bis I₄ sowie der Anlagenstrom I₅ erfaßt. In einem weiteren Schritt 102 wird der Anlagenstrom I₅ mit der Summe der Ströme I₁ bis I₄ verglichen. Wenn im Schritt 102 festgestellt wird, daß der Anlagenstrom nicht mit der Summe der Gleichrichterzweigströme übereinstimmt, wird im Schritt 103 überprüft, ob die Summe der Gleichrichterzweigströme wesentlich größer, d. h., größer als der Anlagenstrom plus ein Zehntel des Anlagennennstroms I_{5N} ist. Wenn dies der Fall ist, liegt ein Kurzschluß in einem Gleichrichter vor, woraufhin in einem Schritt 108 alle Zweige sofort abgeschaltet werden. Dies geschieht durch Ausgabe eines entsprechenden Steuersignals S an die Schalter 4, um zu veranlassen, daß deren Schalter in den geöffneten Zustand übergehen.

Wenn die Summe der Gleichrichterzweigströme nur geringfügig größer ist als der Anlagenstrom, beispielsweise um ein Zwanzigstel des Anlagennennstroms I_{5N}, was in einem Schritt 109 überprüft wird, gibt die Steuereinrichtung ein akustisches und/oder optisches Warnsignal aus (Schritt 110).

Wenn im Schritt 102 festgestellt wurde, daß der Anlagenstrom gleich der Summe aller Gleichrichterzweigströme ist, wird in einem Schritt 104 überprüft, ob der Anlagenstrom I₅ größer als das 1,1-fache des Anlagennennstroms I_{5N} ist. Ist dies der Fall, werden wiederum sofort alle Zweige abgeschaltet, andernfalls wird überpruft, ob der Anlagenstrom das 1,05-fache des Anlagennennstroms übersteigt (Schritt 106). Beim Überschreiten dieses Schwellwerts wird ein akustisches und/oder optisches Warnsignal an das Bedienungspersonal abgegeben, um anzuzeigen, daß sich die Anlage in einem kritischen, jedoch noch betriebsfähigen Zustand befindet. Das Bedienungspersonal kann dann überprüfen, ob es sich eventuell um einen Meßwerterfassungsfehler, verursacht beispielsweise durch Temperaturdrift, handelt und ggf. diesen Fehler beheben, ohne daß dazu die Gleichricheranlage abgeschaltet werden muß.

Zusammenfassend ist festzustellen, daß die erfindungsgemäße Gleichrichteranlage und das erfindungsgemäße Verfahren eine fehlerfreie und schnelle Abschaltung der Anlage ermöglichen, wobei gleichzeitig sichergestellt ist, daß Meßfehler nicht zu einem unnötigen irrtümlichen Abschalten der Gleichrichteranlage führen.

## Patentansprüche

1. Gleichrichteranlage mit einer Schutzschaltung zum Abschalten der Anlage bei Überlast oder Kurzschluß mit wenigstens zwei parallelen Zweigen (2), wobei jeder Zweig zumindest einen Gleichrichter (7), einen Schalter (4) und eine Stromerfassungsein-richtung (6) zum Erfassen des durch den Gleichrichter (7) fließenden Stroms aufweist,
**dadurch gekennzeichnet,** daß die Schutzschaltung eine Stromerfassungseinrichtung (9) zur Erfassung des Anlagenstroms der Gleichrichteranlage, welcher definiert ist durch die Summe der Ausgangsströme aller parallelen Zweige (2), sowie eine Steuereinrichtung (8) aufweist, zum Ansteuern der Schalter aller Zweige im Ansprechen auf die erfaßten Gleichrichterzweigströme und den erfaßten Anlagestrom.

2. Gleichrichteranlage nach Anspruch 1, **dadurch gekennzeichnet,** daß die Steuereinrichtung (8) eine Vergleichseinrichtung aufweist zum Vergleichen der Summe der erfaßten Gleichrichterzweigströme und des erfaßten Anlagenstroms.

3. Gleichrichteranlage nach Anspruch 1 oder 2, **dadurch gekennzeichnet,** daß wenigstens in einem Zweig ein Transformator (5) dem Gleichrichter (7) vorgeschaltet ist.

4. Gleichrichteranlage nach Anspruch 3, **dadurch gekennzeichnet,** daß die Stromerfassungseinrichtung (6) zur Erfassung des Gleichrichterstroms in jedem Zweig (2) zwischen den Transformator und den Gleichrichter (7) geschaltet ist.

5. Gleichrichteranlage nach einem der Ansprüche 1 bis 4, **dadurch gekennzeichnet,** daß die Gleichrichter einen Nennwert von 1 bis 300 kA bei einer Nennspannung in einem Bereich von 10 V bis 1000 V besitzen.

6. Verfahren zum Abschalten einer Gleichrichteranlage bei Überlast oder Kurzschluß mit wenigstens zwei parallelen Zweigen, wobei jeder Zweig zumindest einen Gleichrichter und eine Stromerfassungseinrichtung aufweist, mit folgenden Schritten:
Bestimmen des durch jeden Gleichrichter fließenden Stroms, **gekennzeichet durch**
Bestimmen des Anlagenstroms, welcher definiert ist durch die Summe der Ausgangsströme aller parallelen Zweige, und
unverzögertes Abschalten aller parallelen Zweige, wenn der Anlagenstrom einen Schwellwert überschreitet oder der Anlagenstrom kleiner als die Summe der in jeden Gleichrichter hineinfließenden Zweigströme ist.

7. Verfahren nach Anspruch 6, **dadurch gekennzeichnet,** daß der Schwellwert bei dem 1,1-fachen des Anlagennennstroms liegt.

8. Verfahren nach Anspruch 6 oder 7, **dadurch gekennzeichnet,** daß vor dem Erreichen des Schwellwerts ein akustisches oder optisches Warnsignal abgegeben wird.

9. Verfahren nach einem der Ansprüche 6 bis 8, **dadurch gekennzeichnet,** daß beim Auftreten einer vorbestimmten Differenz zwischen dem Anlagenstrom und der Summe der Gleichrichterzweigstöme ein akustisches oder optisches Warnsignal abgegeben wird.
